(19)

Europäisches Patentamt
European Patent Office
Office européen des brevets

(11) **EP 3 974 785 A1**

(12) **EUROPÄISCHE PATENTANMELDUNG**

(43) Veröffentlichungstag:
**30.03.2022 Patentblatt 2022/13**

(21) Anmeldenummer: **20197928.3**

(22) Anmeldetag: **23.09.2020**

(51) Internationale Patentklassifikation (IPC):
**G01F 1/84** (2006.01)    G01F 15/02 (2006.01)

(52) Gemeinsame Patentklassifikation (CPC):
**G01F 1/8477; G01F 1/849;** G01F 15/02

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder:
• **Heinrichs Messtechnik GmbH**
  **50739 Köln (DE)**

• **Chatzikonstantinou, Thomas**
  **52062 Aachen (DE)**

(72) Erfinder: **CHATZIKONSTANTINOU, Thomas**
  **52062 Aachen (DE)**

(74) Vertreter: **Naeven, Ralf**
  **König Naeven Schmetz**
  **Patent- und Rechtsanwaltskanzlei**
  **Kackertstraße 10**
  **52072 Aachen (DE)**

(54) **CORIOLIS-DURCHFLUSSMESSGERÄT SOWIE VERFAHREN ZUM BETRIEB DES CORIOLIS-DURCHFLUSSMESSGERÄTS**

(57)    Ein Coriolis-Durchflussmessgerät, umfassend einen Messgeräteinlass sowie einen Messgerätauslass für ein Fluid, mindestens ein direkt messendes Direktmessrohr (8, 9) mit mindestens einem Schwingungserreger (25) und mindestens zwei Schwingungssensoren (26, 27), mindestens ein indirekt messendes Indirektmessrohr (10) mit einem Indirektmessrohrauslass (23) und mindestens einen in Strömungsrichtung hinter dem Messgeräteinlass und vor dem mindestens einen Direktmessrohr (8, 9) und dem mindestens einen Indirektmessrohr (10) angeordneten Strömungsteiler (13), kennzeichnet sich dadurch, dass das mindestens eine Direktmessrohr (8, 9) in Strömungsrichtung vor dem Indirektmessrohrauslass (23) unmittelbar oder mittelbar in das Indirektmessrohr (10) oder eines der Indirektmessrohre (10) mündet. Zudem wird ein Verfahren zum Betrieb eines Coriolis-Durchflussmessgeräts vorgeschlagen.

*Fig. 2*

EP 3 974 785 A1

**Beschreibung**

Die Erfindung betrifft ein Coriolis-Durchflussmessgerät gemäß dem Oberbegriff des Anspruchs 1 sowie ein Verfahren zum Betrieb des Coriolis-Durchflussmessgeräts.

Vorrichtungen zur Coriolis-Durchflussmessung sind aus dem Stand der Technik hinreichend bekannt (siehe zum Beispiel DE 20 2017 006 709 U1) und werden insbesondere eingesetzt, den Massendurchsatz und/oder die Dichte eines durchfließenden Fluids zu bestimmen. Coriolis-Durchflussmessgeräte weisen in einem Messwandler mindestens ein Messrohr auf, welches von dem Fluid, dessen Massendurchsatz und/oder Dichte bestimmt werden soll, durchflossen wird. Mittels eines Schwingungserregers wird das mindestens eine Messrohr in Schwingungen versetzt, während gleichzeitig an voneinander getrennten Messstellen die Schwingungen des Messrohres mittels Schwingungssensoren gemessen werden. Fließt während der Messung kein Fluid durch das Messrohr hindurch, schwingt das Messrohr an beiden Messstellen mit gleicher Phase. Bei durchfließenden Fluid hingegen kommt es an den beiden Messstellen aufgrund von auftretenden Corioliskräften zu Phasenverschiebungen, die ein direktes Maß für den Massendurchsatz Q, d. h. für die pro Zeiteinheit durchfließende Masse des Fluids, durch das betroffene Messrohr sind. Zudem ist die Eigenfrequenz des Messrohres an den Messstellen direkt von der Dichte des durchfließenden Fluids abhängig, sodass dessen Dichte ebenfalls bestimmt werden kann.

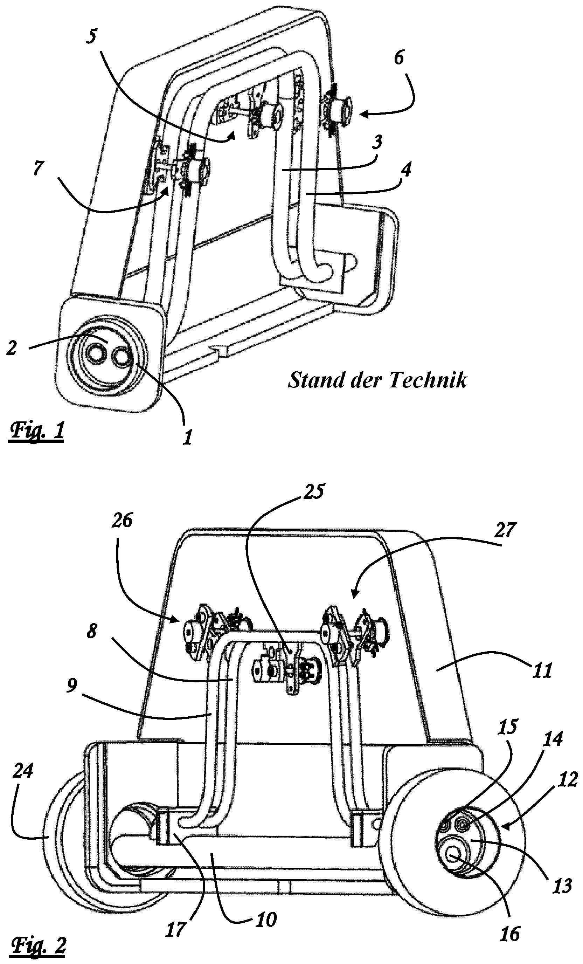

Fig. 1 zeigt perspektivisch ein Coriolis-Durchflussmessgerät nach dem vorgenannten Stand der Technik, welches z.B. zur Messung eines Massendurchflusses in einer Fluidleitung vorgesehen ist. Um einen Einblick ins Innere zu ermöglichen, sind in Fig. 1 Teile des Gehäuses sowie Anschlussleitungen für das Fluid, Anschlusskabel für Elektrik und Daten sowie die Auswerteelektronik nicht dargestellt. In Strömungsrichtung hinter einem Fluideinlass 1, der zum Anschluss an die hier nicht dargestellte Fluidrohrleitung vorgesehen ist, ist ein Strömungsteiler 2 angeordnet, der die Fluidströmung auf zwei direkt messende Messrohre 3 und 4 aufteilt. Die Messrohre 3 und 4 werden mittels einer Schwingungserregeranordnung 5 zu Schwingungen angeregt. Bei einem Durchfluss eines Fluids erzeugen Corioliskräfte eine Phasenverschiebung in den Schwingungsbewegungen jedes der Messrohre 3 und 4, welche mit Schwingungssensoranordnungen 6 und 7 festgestellt werden. Die Messrohre 3 und 4 münden in einem Fluidauslass, der in der Darstellung nicht sichtbar ist und in dem sich die Fluidströme der beiden Messrohre 3 und 4 wiedervereinigen und zurück in die Fluidrohrleitung gelangen.

Werden Coriolis-Durchflussmessgeräte für hohe Fluiddrücke verwendet, weisen sie in der Regel besonders dickwandige Messrohre auf. Schon für die Messung von moderaten Durchflüssen in der Größenordnung von z.B. maximal 1,5 Tonnen/Stunde bei 1.000 bar, welche gemäß den Druckgeräterichtlinien einen Prüfdruck des 1,5-fachen, d.h. 1.500 bar voraussetzen, müssen Messrohre verwendet werden, die einen äußeren Durchmesser in der Größenordnung von 12 Millimeter und eine Wanddicke von mindestens drei Millimeter aufweisen. Bei einem derart steifen Rohrquerschnitt müssen die Messrohre und infolgedessen auch das ganze Gerät Abmessungen in der Größenordnung von einem Meter aufweisen, um hinreichende Phasenverschiebungen und damit Messsignale zu erzeugen. Dadurch erhöht sich der Installationsaufwand, selbst für derart moderate Durchflüsse, beträchtlich. Zudem haben große Längen bei den Messrohren verschlechterte dynamische Eigenschaften zur Folge, was sich durch geringere Messgenauigkeit, Wiederholbarkeit und einen ungenauen Nullpunkt des Messgerätes bemerkbar macht. Außerdem ergibt sich herbei ein größerer Druckverlust innerhalb des Messgerätes. Die vorstehend genannten Probleme der Coriolis-Durchflussmessgeräte bei hohen Fluiddrücken, z.B. in der Größenordnung von 1000 bar oder noch mehr, gelten für den Stand der Technik als unvermeidbar.

Zudem führen Coriolis-Durchflussmessgeräte mit großen Abmessungen dazu, dass die Schwingungen der Messrohre zu einem Mitschwingen der umgebenden Luft und damit zu diversen aeroakustischen Effekten führen, welche im Betrieb laut und störend sein können. Die vorgenannten Probleme nehmen mit zunehmenden Abmessungen der Coriolis-Durchflussmessgeräte zu, insbesondere bei Messgeräten, die für Messungen von Durchflüssen in der Größenordnung von z.B. 2.000 Tonnen/Stunde eingerichtet sind. Bei direktem Anschluss an große Rohrleitungen sind entsprechend große Abmessungen des Messgeräts in der Größenordnung von 2 Metern, dessen hohes Gewicht in der Größenordnung von einer Tonne und ein hoher Installationsaufwand die Folge.

Aus DE 10 2016 118 016 A1 ist ein Coriolis-Durchflussmessgerät der eingangs genannten Art bekannt, das auch bei hohen Fluiddurchflüssen einen niedrigen Installationsaufwand und eine niedrige Installationslänge aufweist. Es handelt sich bei diesem Gerät um ein Coriolis-Durchflussmessgerät nach der sog. "Bypass-Technik", welches direkt an eine Rohrleitung angeschlossen werden kann. Das Gerät teilt den Fluidstrom, dessen Durchfluss zu messen ist, in zwei oder mehrere Teilströme auf. Direkt gemessen mittels Schwingungserreger und Schwingungssensoren wird der Teil-Durchfluss in mindestens einem Direktmessrohr, während der Restdurchfluss durch mindestens ein Indirektmessrohr fließt, dem keine Schwingungen aufgegeben werden. Der Gesamt-Durchfluss wird dann aus dem direkt gemessenen Teil-Durchfluss mittels eines Umrechnungsfaktors, der die Geometrien aller Rohre berücksichtigt, ermittelt. Die einzelnen Teilströme beeinflussen sich bei diesem Coriolis-Durchflussmessgerät, aufgrund der separaten Ausgestaltung der Rohre, nicht, was zu gravierenden Nachteilen führen kann. Es ist z.B. bekannt, dass Durchflussmessgeräte und insbesondere Coriolis-Durchflussmessgeräte, welche die Bypass-Technik nutzen, umso ungenauer werden je kleiner der Teil-Durchfluss durch das mindestens eine Direktmessrohr ist. Bei dem bereits genannten Stand der Technik nach DE 10 2016 118 016 A1 geht für eine hinreichend genaue Messung nur dann ein genügender Teil-Durchfluss durch das mindestens eine Direktmessrohr, wenn auch die anderen Rohre den gleichen Durchmesser und die gleiche Länge aufweisen. Weil dann aber, um ein Coriolis-Durchflussmessgerät gestalten zu können, das für den direkten Anschluss an große Rohrleitungen geeignet ist, diese Rohre sehr zahlreich sein müssen, erhöht sich der Druckverlust im Gerät stark, was wiederum mit einem unerwünscht hohen Energieverlustes einhergeht.

Die bereits genannte DE 10 2016 118 016 A1 offenbart auch Ausführungsformen, bei denen der Durchmesser des mindestens einen Indirektmessrohres den des mindestens einen Direktmessrohres deutlich übersteigt, so dass der Gesamtdruckverlust des Messgerätes und die Gesamtanzahl der Messrohre klein gehalten werden kann. Da Fluide dem Weg des geringsten Widerstands folgen, hätte dies ohne besondere Maßnahmen zur Folge, dass durch das Direktmessrohr ein derart geringer Anteil des Fluidstromes fließt, dass die Messgenauigkeit unbefriedigend sein kann, insbesondere im unteren Messbereich des Messgerätes.

Ferner erfolgt die Bestimmung des Gesamt-Durchflusses mittels eines Umrechnungsfaktors, der die Geometrien der wenigstens zwei Messrohre berücksichtigt. Der mögliche Einfluss der Parameter Viskosität, Temperatur und Druck des Fluids sowie die Abhängigkeit des Umrechnungsfaktors vom momentanen Gesamt-Durchfluss auf das Messergebnis bleibt in DE 10 2016 118 016 A1 unerwähnt, womit weitere Faktoren für ungenaue Messergebnisse vorliegen. Eine Abhängigkeit des Umrechnungsfaktors vom momentanen Gesamt-Durchfluss ist nur für den Fall der besonders ungünstigen Ausgestaltung mit mehreren Rohren gleichen Durchmessers zu vernachlässigen. Dieser Fall führt jedoch, wie vorerwähnt, zu hohem Druck- und Energieverlust und kann deswegen weniger praktikabel sein.

Insbesondere wird in DE 10 2016 118 016 A1 nicht berücksichtigt, dass das sogenannte Bypass-Verhältnis, d.h. das Verhältnis zwischen dem Durchfluss durch das mindestens eine Direktmessrohr und dem Gesamt-Durchfluss, keine rein geometrische Größe und daher keineswegs konstant über den Messbereich des Geräts ist. Tatsächlich hängt das Bypass-Verhältnis vom momentanen Gesamt-Durchfluss und/oder von Viskosität, Temperatur und/oder Druck des zu messenden Fluids ab. Es steht zu vermuten, dass aus den genannten Gründen Geräte, die nach den Prinzipien des Standes der Technik gemäß DE 10 2016 118 016 A1 ausgebildet sind, bisher am Markt keinen Durchbruch erzielt haben.

Bei der Lösung der vorstehend beschriebenen Probleme leisten die älteren Dokumente US 9,080,908 B2 sowie DE 10 2008 002 217 A1 keine Abhilfe. Die US 9,080,908 B2 spricht das Problem an, dass Messrohre, die für Coriolis-Durchflussmessgeräte vorgesehen sind, hinsichtlich ihres Durchmessers begrenzt sind und dementsprechend seinerzeit 70 % der Coriolis-Durchflussmessgeräte mit Direktmessrohren mit einem Durchmesser von zwei Zoll oder weniger verkauft wurden. Als Lösung wird vorgeschlagen, innerhalb eines äußeren zylindrischen Rohres, durch welches das das Fluid fließt und welches den Durchmesser der zuleitenden Fluidrohrleitung aufnimmt, mindestens ein Direktmessrohr vorzusehen, das von einem Teilstrom des Fluids durchflossen wird. Das heißt, das Direktmessrohr wird vom Großteil des Fluids umflossen. Diese Lösung sei unter anderem auch für Messungen nach dem Prinzip der Coriolis-Durchflussmessung machbar. Nachteilig ist allerdings, dass für die Messung erforderliche Strom- oder Datenleitungen durch das äußere Rohr geführt werden müssen. Eine Kalibrierung wird zwar angesprochen, nicht jedoch die Abhängigkeit des Faktors zur Umrechnung vom Messergebnis des Direktmessrohres zum Gesamt-Durchflusses vom Gesamt-Durchfluss selbst und/oder von Viskosität, Temperatur und/oder Druck.

Die DE 10 2008 002 217 A1 offenbart eine Variante, bei der zur Coriolis-Durchflussmessung das Messrohr durch eine mittig verlaufende Trennwand in zwei Teilmessrohre aufgeteilt wird, wobei die beiden Teile gleiche Querschnitte aufweisen. Das Messrohr kann denselben Außendurchmesser aufweisen, wie die FluidRohrleitung, so dass ein Flansch nicht erforderlich ist. Eine Kalibrierung wird nicht angesprochen.

Aus DE 20 2014 102 258 U1 ist ein weiteres Coriolis-Durchflussmessgerät bekannt, welches die Bypass-Technik nutzt. Wie bei der DE 10 2016 118 016 A1 wird der zu messende Durchfluss durch eine entsprechende Anzahl von Rohren in zwei oder mehrere Teil-Durchflüsse aufgeteilt. Direkt gemessen wird der Teil-Durchfluss in einem Direktmessrohr, der Gesamt-Durchfluss wird dann aus diesem direkt gemessenen Teil-Durchfluss-Wert mittels eines Umrechnungsfaktors angegeben. Die einzelnen Teilströme beeinflussen sich aufgrund der separaten Ausgestaltung der Rohre, auch bei diesem Coriolis-Durchflussmessgerät nicht. Ist der Teil-Durchfluss durch das Direktmessrohr hindurch im Verhältnis zum Gesamt-Durchfluss gering, ist zu erwarten, dass ohne besondere Maßnahmen auch hier wenig bis gar kein Teil-Durchfluss durch das Direktmessrohr fließt, weshalb die oben bereits angesprochenen Probleme nicht gelöst werden.

Auch die US 5,861,561 lehrt die Anwendung von Bypass-Technik in Kombination mit einem direkt messenden Durchflussmesser, der auch ein Coriolis-Durchflussmessgerät sein kann. Das Coriolis-Durchflussmessgerät kann sowohl außerhalb einer Hauptleitung als auch in einer Hauptleitung installiert sein. Bei der Ausführungsform mit einem außerhalb des Indirektmessrohres angeordneten Direktmessrohr wird allerdings der Einlass für das Direktmessrohr in das Indirektmessrohr gelegt.

Als Folge der Ausgestaltung des außen liegenden direkt messenden Durchflussmessers nach der Lehre von US 5,861,561 kann es am Einlass zum Direktmessrohr wegen möglicher Strömungsablösungen und Druckgradienten zu Problemen kommen, die sogar, z.B. durch Verdichtungsstöße bei Gasen, zu Verstopfungen führen können. Die ebenfalls vorgeschlagene Variante des Einbaus des direkt messenden Durchflussmessers in die Hauptleitung ist nachteilig, weil der begrenzte Raum es nicht ermöglicht, messempfindlichere U-förmige Messrohre zu verwenden. Auch die elektrische/elektronische Verbindung nach außen ist ohne Durchführungen und an diesen entstehenden Strömungsablösungen nicht möglich. Die Möglichkeit des einfachen und kompakten Anschlusses eines Messgerätes nach der Lehre der US 5,861,561 ist nicht offenbart.

Ausgehend von diesem Stand der Technik besteht die technische Aufgabe dieser Erfindung darin, ein Verfahren und eine Vorrichtung zur Ermittlung eines Strömungsparameters mittels eines Coriolis-Durchflussmessgerätes für hohe Drücke und/oder für den direkten Anschluss an große Rohrleitungen zur Verfügung zu stellen, welche über den gesamten Messbereich eine hohe Genauigkeit ermöglichen.

Des Weiteren sollen vorzugsweise bei der Messung ein möglichst geringer Druckverlust und auch bei hohen Durchflussraten eine geringe akustische Belastung gegeben sein.

Bei einem Coriolis-Durchflussmessgerät der eingangs genannten Art wird die technische Aufgabe durch die kennzeichnenden Merkmale des Anspruchs 1, bei einem Verfahren der eingangs genannten Art durch die Merkmale des Anspruchs 7 gelöst.

Vorteilhafte Ausführungen der erfindungsgemäßen Vorrichtung sowie des erfindungsgemäßen Verfahrens ergeben sich aus den jeweiligen abhängigen Ansprüchen.

Vorliegende Erfindung benutzt die Begriffe des Direktmessrohres und des Indirektmessrohres. Das Direktmessrohr wird in Schwingungen versetzt und misst den Durchfluss eines Fluids nach dem Coriolis-Messprinzip. Im Gegensatz dazu werden beim Indirektmessrohr bei Durchfluss des Fluids keine Coriolis-Kräfte gemessen, weshalb der Fluiddurchfluss allein im Verbund mit einem oder mehreren Direktmessrohren gemessen werden kann.

Gemäß der Erfindung wird bei einem Coriolis-Durchflussmessgerät, umfassend einen Messgeräteinlass sowie einen Messgerätauslass für ein Fluid, mindestens ein direkt messendes Direktmessrohr mit mindestens einem Schwingungserreger und mindestens zwei Schwingungssensoren, mindestens ein indirekt messendes Indirektmessrohr mit einem Indirektmessrohrauslass sowie mindestens einen in Strömungsrichtung hinter dem Messgeräteinlass und vor dem mindestens einen Direktmessrohr und dem mindestens einen Indirektmessrohr angeordneten Strömungsteiler, vorgeschlagen, dass das mindestens eine Direktmessrohr in Strömungsrichtung vor dem Indirektmessrohrauslass unmittelbar oder mittelbar in das Indirektmessrohr oder eines der Indirektmessrohre mündet.

Die Fluidströmung im Indirektmessrohr sorgt für einen Unterdruck an der Mündungsstelle des mindestens einen Direktmessrohres oder - sofern das betroffene Indirektmessrohr mittelbar im betroffenen Indirektmessrohr mündet - an der Mündungsstelle eines Zwischenstücks, z.B. eines Endstücks, wie es weiter unten beschrieben wird. Hierdurch kann ein hinreichender Durchfluss durch das mindestens eine Direktmessrohre und damit eine gute Genauigkeit der Messung des Gesamtdurchflusses $Q_{ALL}$ über den gesamten Messbereich des Messgerätes erreicht werden.

Im Folgenden werden vorteilhafte und beispielhafte Ausführungsformen des erfindungsgemäßen Coriolis-Durchflussmessgeräts sowie des erfindungsgemäßen Verfahrens anhand von Figuren dargestellt.

Es zeigt schematisch

Fig.1: perspektivisch ein Coriolis-Durchflussmessgerät gemäß dem Stand der Technik,

Fig. 2: perspektivisch und in Teilen eine erste Ausführungsform eines erfindungsgemäßen Coriolis-Durchflussmessgeräts,

Fig. 3: Fluidströme in dem Coriolis-Durchflussmessgerät nach Fig. 2,

Fig. 4: ausschnittsweise die Mündung von Direktmessrohren in ein Indirektmessrohr des Coriolis-Durchflussmessgerätes nach Fig. 2,

Fig. 5: Fluidströme in einer zweiten Ausführungsform des erfindungsgemäßen Coriolis-Durchflussmessgeräts,

Fig. 6: ausschnittsweise die Mündung von Direktmessrohren in ein Indirektmessrohr der zweiten Ausführungsform und

Fig. 7: ein Diagramm zur Abhängigkeit des Faktors λ vom Fluid-Durchfluss durch die Direktmessrohre.

Ein Coriolis-Durchflussmessgerät gemäß dem Stand der Technik, wie es in Fig. 1 dargestellt ist, wurde bereits weiter oben beschrieben. Fig. 2 zeigt demgegenüber als Beispiel perspektivisch ein erstes Coriolis-Durchflussmessgerät nach der vorliegenden Erfindung mit einem ersten Direktmessrohr 8, einem zweiten Direktmessrohr 9 und einem Indirektmessrohr 10. Die am hier dargestellten Beispiel beschriebene erfinderische Technik kann in entsprechender Weise bei anderen Bauweisen eines Coriolis-Durchflussmessgeräts, z.B. mit nur einem Direktmessrohr oder mehr als zwei Direktmessrohren und/oder mit mehr als einem Indirektmessrohr und/oder anderer Sensortechnik, in entsprechender Weise eingesetzt werden.

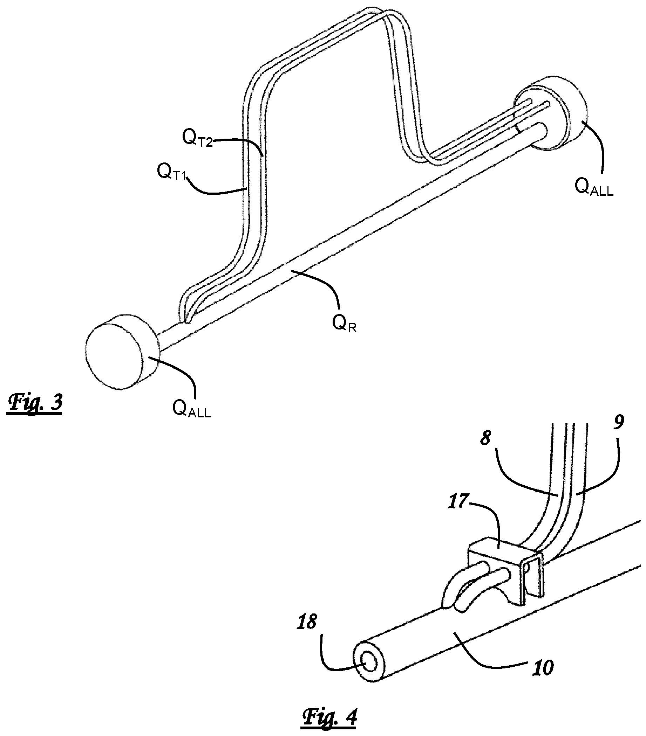

Um einen Einblick ins Innere des Gerätes zu ermöglichen, sind Teile eines Gehäuses 11, Prozessanschlüsse, Knotenbleche, Anschlusskabel und ggf. eine Auswerteelektronik in Fig. 2 nicht dargestellt. Fig. 3 visualisiert schematisch die Fluiddurchflüsse durch das erste Coriolis-Durchflussmessgerät ohne die dazugehörigen Rohre. Es ist somit ein Blick auf das Fluid gegeben.

An ein hier nicht dargestelltes Fluidrohr wird das erste Coriolis-Durchflussmessgerät angeflanscht, sodass aus dem Fluidrohr austretendes Fluid in einen Fluideinlass 12 des ersten Coriolis-Durchflussmessgeräts gelangt und auf einen Strömungsteiler 13 trifft. Über einen ersten Direktmessrohr-Eingang 14 (Fig. 2) gelangt ein erster Teildurchfluss $Q_{T1}$ in das erste Direktmessrohr 8 und über einen zweiten Direktmessrohr-Eingang 15 ein zweiter Teildurchfluss $Q_{T2}$ in das zweite Direktmessrohr 9. Über einen Indirektmessrohr-Eingang 16 gelangt das Fluid mit einem Restdurchfluss $Q_R$ in das Indirektmessrohr 10. Die Summe der Teildurchflüsse $Q_{T1}$ und $Q_{T2}$ mit dem Restdurchfluss $Q_R$ ergibt den Gesamtdurchfluss $Q_{ALL}$.

Im Bereich des Strömungsteilers 13 herrscht vor den Messrohreingängen 14, 15 und 16 ein einheitlicher Druck, wodurch alle Messrohre 8, 9 und 10 gleichberechtigt versorgt werden.

Die beiden Direktmessrohre 8 und 9 münden in das Indirektmessrohr 10, wie insbesondere in Fig. 4 zu sehen ist. Der Mündungsbereich ist in Fig. 2 durch ein hinteres Knotenblech 17 weitgehend verdeckt. Das Münden der Teildurchflüsse $Q_{T1}$ und $Q_{T2}$ in den Restdurchfluss $Q_R$ ist in Fig. 3 erkennbar. Die Vereinigung der Teildurchflüsse $Q_{T1}$ und $Q_{T2}$ mit dem Restdurchfluss $Q_R$ zum Gesamtdurchfluss $Q_{ALL}$ erfolgt in Strömungsrichtung vor einem Indirektmessrohr-Auslass 18 (Fig. 4), durch den der Gesamtdurchfluss $Q_R$ über einen Austrittsflansch 24 einem hier nicht dargestellten Fluidrohr zugeführt wird.

Zur Messung werden mittels eines Schwingungserregers 25 die Direktmessrohre 8 und 9 in Schwingungen versetzt, während gleichzeitig an voneinander getrennten Messstellen jeweils die Schwingungen beider Direktmessrohre 8 und 9 mittels Schwingungssensoren 26 und 27 gemessen werden. Fließt während der Messung kein Fluid durch die Direktmessrohre 8 und 9 hindurch, schwingen sie an beiden Messstellen jeweils mit gleicher Phase. Bei durchfließendem Fluid hingegen kommt es an den beiden Messstellen aufgrund von auftretenden Coriolis-Kräften zu Phasenverschiebungen, die ein Maß nicht nur für die Teildurchflüsse $Q_{T1}$ und $Q_{T2}$ sind, sondern, im Verbund mit dem Indirektmessrohr 10 bei weiter unten dargestellter Berechnung auch ein Maß für den Gesamt-Durchfluss $Q_{ALL}$ sind. Zudem sind die an den Messstellen der Schwingungssensoren 26 und 27 festgestellten Eigenfrequenzen der Direktmessrohre 8 und 9 von der Dichte des durchfließenden Fluids abhängig, sodass dessen Dichte auch bestimmt werden kann. Ein Beitrag des indirekt messenden Messrohres ist hierzu nicht notwendig.

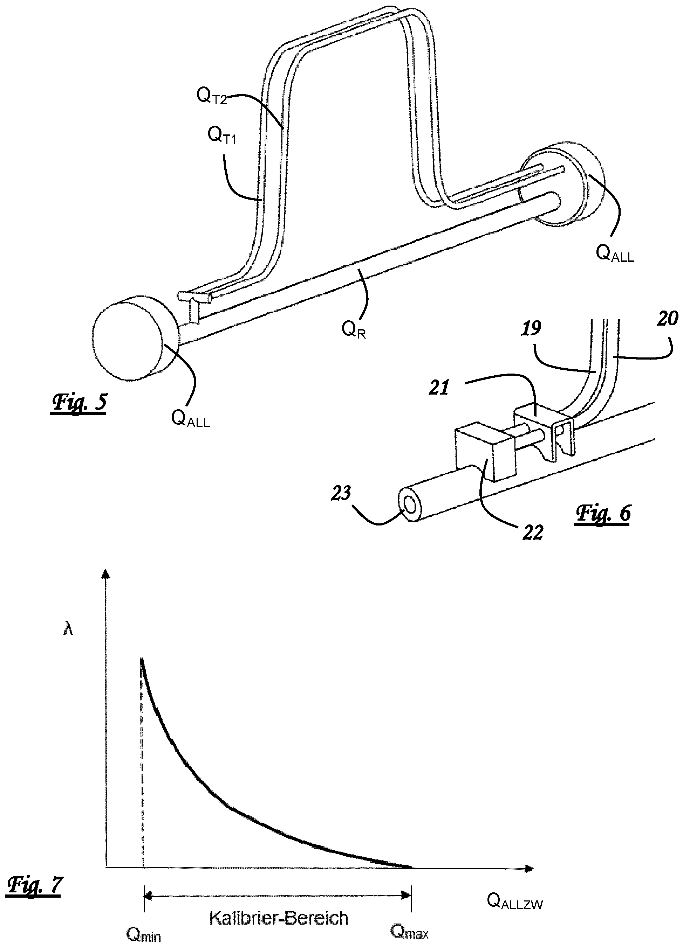

Fig. 5 visualisiert schematisch und perspektivisch die Fluiddurchflüsse durch ein hier nicht näher gezeigtes zweites Coriolis-Durchflussmessgerät ohne die dazugehörigen Rohre. Die Besonderheit dieser zweiten Ausführungsform des erfindungsgemäßen Durchflussmessgeräts besteht lediglich darin, dass die beiden Teildurchflüsse $Q_{T1}$ und $Q_{T2}$ zusammengeführt werden, bevor sie mit dem Restdurchfluss $Q_R$ vereinigt werden. Fig. 6 zeigt in einem vergrößerten Ausschnitt die zugehörige Verrohrung mit einem ersten Direktmessrohr 19 und einem zweiten Direktmessrohr 20 des zweiten Coriolis-Durchflussmessgeräts, welche nach Passieren eines Knotenblechs 21 in einem Sammelelement 22 münden, welches das Fluid dem Restdurchfluss im Indirektmessrohr 23 zuführt, bevor der Gesamtdurchfluss $Q_R$ über einen Indirektmessrohr-Auslass 23 austreten kann.

Im Folgenden wird das erfindungsgemäße Messverfahren anhand der in den Fig. 2 bis 4 dargestellten Vorrichtung beispielhaft näher erläutert. Soweit in diesem Beispiel von zwei Direktmessrohren 8 und 9 und von einem Indirektmessrohr 10 die Rede ist, versteht sich für den Fachmann, dass entsprechendes auch bei anderen Konstellationen gilt, also z.B. bei der Variante nach den Fig. 5 und 6 wie auch bei nur einem Direktmessrohr oder mehr als zwei Direktmessrohren und/oder bei zwei oder mehr Indirektmessrohren.

Weil nur die Direktmessrohre 8 und 9 nach dem Coriolis-Messprinzip messen können, muss der eigentlich interessierende Gesamtdurchfluss $Q_{ALL}$ berechnet werden. Die Messung ist umso genauer, je größer der Anteil der direkt gemessenen Teildurchflüsse $Q_{T1}$ und $Q_{T2}$ am zu messenden Gesamt-Durchfluss $Q_{ALL}$ ist, d.h. je größer das sog. Bypass-Verhältnis ist. Als Bypass wird hier der Durchfluss durch die Direktmessrohre 8 und 9 verstanden.

Das Bypass-Verhältnis ist nicht über den gesamten Messbereich, d.h. von niedrigen bis hohen Gesamtdurchflüssen $Q_{ALL}$ konstant. So ist es besonders vorteilhaft, nicht nur bei einem bestimmten Gesamtdurchfluss $Q_{ALL}$ einen großen Anteil an Teildurchflüssen $Q_{T1}$ und $Q_{T2}$ zu haben, sondern ein geeignet großes Bypass-Verhältnis über den gesamten Messbereich des Messgerätes hinweg gewährleisten zu können. Hierzu trägt in erfindungsgemäßer Weise bei, dass die Direktmessrohre 8 und 9 unmittelbar, oder gemäß der Variante nach den Fig. 5 und 6 mittelbar, in das Indirektmessrohr 10 münden, da hierdurch die Teildurchflüsse $Q_{T1}$ und $Q_{T2}$ an der Mündung nicht nur mit dem dort ankommenden Restdurchfluss $Q_R$ vermengt werden. Vielmehr sorgt die Fluidströmung im Indirektmessrohr 10 für einen Unterdruck an der Mündungsstelle, der einen hinreichenden Durchfluss durch die Direktmessrohre 8 und 9 und damit eine gute Genauigkeit der Messung des Gesamtdurchflusses $Q_{ALL}$ über den gesamten Messbereich des Messgerätes gewährleisten kann.

Mithin können aufgrund der erhöhten Durchflüsse durch die Direktmessrohre 8 und 9 deren Durchmesser und auch Wandstärken klein gehalten werden. Eine beispielhafte Ausführungsform des erfindungsgemäßen Coriolis-Durchflussmessgeräts mit beispielsweise 1500 kg/h Massendurchfluss bei 1000 bar Arbeitsdruck, (bei z.B. 1500 bar Prüfdruck) kann mit Direktmessrohren mit nur 4 Millimeter Außendurchmesser und einer Wanddicke von nur 1 Millimeter realisiert werden. Somit können die Abmessungen des Coriolis-Durchflussmessgerätes insgesamt, auch in seiner Längsrichtung, vergleichsweise gering gehalten werden, auch wenn hohe Fluiddurchflüsse oder hohe Fluiddrücke gegeben sind, z.B. wenn es darum geht, Gase bei sehr hohen Drücken von z.B. 1000 bar und mehr, wie sie z.B. bei der Wasserstoff-Betankung von Fahrzeugen und ähnlichen Anwendungen auftreten, messen zu können. Mit der Erfindung sind also auch für sehr hohe Drücke Coriolis-Durchflussmessgeräte realisierbar, die im Vergleich zu einem für gleiche Druckbereiche verfügbare Coriolis-Durchflussmessgeräte gemäß Stand der Technik kompakter gebaut werden können. Mit der Erfindung sind aber auch für um Größenordnungen höhere Massendurchflüsse als die vorgenannten 1500 kg/h Coriolis-Durchflussmessgeräte realisierbar, die im Vergleich zu einem für gleiche Messbereiche verfügbare Coriolis-Durchflussmessgeräte gemäß Stand der Technik kompakter, messstabiler, laufruhiger und preiswerter gebaut werden können.

Die kompaktere Bauweise bringt auch messtechnische Vorteile, da durch die bei erfindungsgemäßen Messgeräten möglichen geringere Abmessungen des Indirektmesssrohrs 10 in seiner Längsrichtung die Steifigkeit des Coriolis-Durchflussmessgerätes und damit auch seine Nullpunktstabilität, Messgenauigkeit und Wiederholbarkeit verbessert werden können.

Von der Lehre der vorliegenden Erfindung profitiert auch die Akustik der Coriolis-Durchflussmessgeräte, insbesondere für die Messung von sehr hohen Fluiddurchflüssen in der Größenordnung von Tausenden von Tonnen pro Stunde. Da im Stand der Technik gegenüber der diesseitigen Erfindung in der Regel größere Direktmessrohre verbaut werden, wird auch die das Direktmessrohr oder die Direktmessrohre umgebende Luft stärker in Schwingungen versetzt, was laute und störende Betriebsgeräusche erzeugen kann. Nach der erfindungsgemäßen Lehre können kleinere äußeren Abmessungen der Direktmessrohre 8 und 9 vorgesehen werden, die entsprechend geringere Schwingungsenergie übertragen und somit für geringere Betriebsgeräusche sorgt.

Durch die Bypass-Technik wird der Druckverlust des Fluids im Coriolis-Durchflussmessgerätes verringert, da der Hauptteil des Gesamtdurchflusses $Q_{ALL}$, nämlich der Restdurchfluss $Q_R$, durch ein im Vergleich zu den Direktmessrohren 8 und 9 kurzes und mit einem größeren Innendurchmesser versehenes Indirektmesssessrohr 10 fließt.

Wie bereits erwähnt ist das Bypass-Verhältnis, d.h. das Verhältnis zwischen der Summe der direkt gemessenen Teildurchflüsse $Q_{T1}$ und $Q_{T2}$ und dem Gesamtdurchfluss $Q_{ALL}$ keine allein durch die Geometrie bestimmte Größe, wie es nach dem erwähnten Stand der Technik DE 10 2016 118 016 A1 scheint, und daher keineswegs über den gesamten Messbereich von Q konstant. Vielmehr hängt das Bypass-Verhältnis vom momentanen Gesamtdurchfluss $Q_{ALL}$ sowie von Viskosität, Temperatur und Druck des zu messenden Fluids ab. Analytische Formeln aus der Literatur, die zumindest die Viskosität näherungsweise berücksichtigen, wie z.B. die DE 20 2014 102 258 U1 lehrt, haben Gültigkeit nur für sehr einfache Geometrien, zumeist nur für zylindrische Rohre und können strömungsmechanische Effekte in den Messgeräten erst gar nicht zufriedenstellend erfassen. Dieses grundlegende Problem löst folgende Erfindung wie folgt:

Die Summe der Teildurchflüsse $Q_{T1}$ und $Q_{T2}$ in den Direktmessrohren 8 und 9 ergeben einen Gesamtteildurchfluss $Q_{TG}$. Um zum Gesamtdurchfluss $Q_{ALL}$ zu kommen, ist der Restdurchfluss $Q_R$ hinzuzuaddieren, der jedoch nicht direkt gemessen wird. Vielmehr ergibt sich ein erster Wert, im Folgenden Zwischenwert $Q_{ALLZW}$ genannt, für den Gesamtdurchfluss aus einer Kalibrierung des Coriolis-Durchflussmessgerätes, wie dies grundsätzlich aus dem Stand der Technik für Messgeräte ohne Bypass-Technik bekannt ist. Die Kalibrierung erfolgt mit einem bekannten Medium, z.B. Wasser, unter vorgegebenen Umgebungsbedingungen.

Um die Abhängigkeit des tatsächlichen Gesamtdurchflusses $Q_{ALL}$ von den vorerwähnten Größen zu berücksichtigen, wird der Zwischenwert mit dem Faktor $(1 + \lambda)$ multipliziert, so dass gilt:

$$Q_{ALL} = Q_{ALLZW} * (1 + \lambda).$$

Die Größe "$Q_{ALLZW} * \lambda$" ist also faktoriell derjenigen Teil des Gesamtdurchflusses, der vom Gerät bei seiner Kalibrierung nicht erfasst worden ist und dazu addiert werden muss. Für ein Gerät, dessen Geometrie und Material bekannt sind, hängt der Faktor $\lambda$ insbesondere vom Massendurchfluss Q aber auch von der Viskosität und zunächst des Weiteren von Druck und Temperatur des zu messenden Fluids ab. Dies stellt ein Kennfeld mit der Viskosität, dem Druck und die Temperatur dar, wobei die Viskosität auch selbst von der Temperatur abhängen kann.

Fehler durch Druck und Temperatur können allerdings im Rahmen einer vereinfachten Umsetzung der vorliegenden Erfindung so kompensiert werden, wie dies aus dem Stand der Technik für Coriolis-Durchflussmessgeräten ohne Bypass-Technik bereits bekannt ist. Dadurch können sie als Parameter bei der Bestimmung von $\lambda$ entfallen, wodurch man im Rahmen dieser vereinfachten Umsetzung somit ein wesentlich einfacheres Kennfeld erhält, welches lediglich den relativen Fehler $\lambda$ als Funktion vom noch fehlerbehafteten Zwischenwert $Q_{ALLZW}$ angibt und nur noch die Viskosität als Parameter hat. Fig. 6 zeigt qualitativ die Abhängigkeit des relativen Fehlers $\lambda$ vom gemessenen Zwischenwert $Q_{ALLZW}$, wobei diese Funktion als Parameter die Viskosität noch enthält. Natürlich ist es auch möglich, die Abhängigkeit von Druck und Temperatur zusätzlich zu berücksichtigen.

Die Abhängigkeit von der Viskosität kann experimentell oder mittels Simulation ermittelt werden und von einer hier nicht dargestellten Auswerteeinheit als Kennfeld eingesetzt werden. Das Kennfeld selbst kann entweder eine analytische Form aufweisen oder in Form von diskreten Werten vorliegen, zwischen denen mit Interpolationsmethoden interpoliert wird.

Für die Ermittlung des Gesamtdurchflusses $Q_{ALL}$ müssen die Teildurchflüsse $Q_{T1}$ und $Q_{T2}$ sowie der Gesamtteildurchfluss $Q_{TG}$ selbst nicht zahlenmäßig bestimmt werden. Vielmehr kann der Gesamtdurchfluss aus den an den Direktmessrohren 8 und 9 gemessenen Phasenverschiebungen unter Berücksichtigung der Kalibrierung und des Kennfeldes direkt bestimmt werden.

Die Ermittlung des Kennfelds mittels Simulation ist insbesondere vorteilhaft bei Fluid-Struktur-Interaktion-Simulationen (in der CAE Literatur übliche Abkürzung: FSI Simulationen). Die Simulation kann außerhalb des erfindungsgemäßen Coriolis-Durchflussmessgerätes erfolgen, um das damit erstellte Kennfeld in eine Auswerteeinheit des Coriolis-Durchflussmessgeräts zu übertragen, z.B. über eine geeignete Schnittstelle, ein lokales Netzwerk, das Internet oder andere Verbindungsmöglichkeiten. Die Simulation kann aber auch in der Auswerteeinheit selbst erfolgen.

Das Kennfeld kann - wie bereits erwähnt - durch Interpolationsverfahren ergänzt werden, so dass die experimentelle oder simulationsbasierte Ermittlung einer beschränkten Anzahl von diskreten Werten ausreichend sein kann. Besonders vorteilhaft kann es sein, als Interpolationsverfahren zumindest auch Kriging einzusetzen.

Kriging, auch Krigen genannt, ist ein auf Danie Krige zurückgehendes Interpolationsverfahren, welches im Stand der Technik im Zusammenhang mit geostatistischen Verfahren und außerhalb der Geostatistik als Gaußprozess-Regression bekannt ist. In der Geostatistik werden stochastische Methoden zur Charakterisierung und Schätzung von Daten eingesetzt, zum Beispiel zur Ermittlung der Verteilung von Oberflächentemperaturen in Landbereichen oder Gewässern. Hierfür werden an einzelnen Punkten des zu untersuchenden Gebiets Messwerte erfasst, die dann als Ausgangspunkte für eine räumliche Interpolation genutzt werden. Aus einer endlichen Anzahl von Messwerten können so beliebig viele Schätzwerte ermittelt werden, die möglichst genau die Realität abbilden sollen.

Beim Kriging-Verfahren wird in der Geostatistik die räumliche Varianz berücksichtigt, für deren Ermittlung Semivariogramme eingesetzt werden. Die für die Berechnung genutzten Messwerte werden dabei so gewichtet, dass die Schätzfehlervarianz möglichst gering ist, was im Vergleich zu anderen Interpolationsverfahren ein besonderer Vorteil bezüglich der Genauigkeit der Schätzung der Zwischenwerte ist. Mit Kriging kann im Vergleich zu anderen Interpolationsverfahren, insbesondere auch zu höhergradigen Polynomen, in der Regel insbesondere bei einer geringen Anzahl von Datenpunkten, das heißt bei einem kleinen Grunddatensatz eine höhere Genauigkeit erreicht werden.

Das Ergebnis von Kriging kann allerdings, anders als dies bei alternativen Interpolationsverfahren möglich ist, nicht in einer geschlossenen Form, z.B. als Polynom, angegeben werden. Kriging ist aufwendig und setzt in der Regel Inversion und Multiplikation von mehreren Matrizen ein. Da Kriging somit sehr rechen- und speicherintensiv ist, sollte es vermieden werden, einen groben Grunddatensatz mittels Kriging beliebig fein aufzulösen. Vielmehr kann es für eine hinsichtlich Zeit und Speicherbedarf optimierte Verfahrensweise vorteilhaft sein, aus dem Grunddatensatz mittels Kriging in einer ersten Stufe eine verfeinerte Matrix zu bekommen, z.B. verfeinert um den Faktor 5, 10 oder 100, und für eine weitere Verfeinerung zwischen den durch mittels Kriging gewonnenen Werten andere, weniger aufwendige Interpolationsverfahren einzusetzen. Das Ergebnis der weniger aufwendigen Interpolationsverfahren kann dann wiederum in einer geschlossenen Form, z.B. linear, angegeben werden.

Durch die Art der nach vorliegender Erfindung durchgeführten Kalibrierung ist der Restdurchfluss $Q_R$ keine einfache Rechengröße mehr, sondern nimmt durch seinen Beitrag bei der Kalibrierung auch an der Ermittlung der Geräteparameter teil.

Deswegen ist es richtig, auch das Indirektmessrohr 10 als ein Messrohr zu bezeichnen.

Aus diesem Grund aber auch weil die experimentelle oder simulationsbasierte Ermittlung des Kennfelds und insbesondere auch weil die Ermittlung des Kennfeldes mittels Fluid-Struktur-Interaktion-Simulationen wesentlich genauer ist als die arithmetische Berechnung des Gesamtdurchflusses mittels bloßer geometrischer Zusammenhänge der Durchmesser der Messrohre oder durch stark eingegrenzte analytische (Näherungs-)Formeln können gegenüber dem Stand der Technik genauere Messergebnisse erreicht werden.

Vorliegende Erfindung beinhaltet auch das Messen eines Gesamt-Durchflusses Q mit mehreren parallelgeschalteten Coriolis-Durchflussmessgeräten nach der vorliegenden Erfindung. Dies gilt auch für den Fall, dass alle direkt und indirekt messenden Messrohre dieser Geräte von einem gemeinsamen Strömungsteiler ausgehen und alle indirekt messenden Messrohre zu einem gemeinsamen Auslass führen.

Bei vorliegender Erfindung ist auch die Bestimmung der Dichte des zu messenden Fluids genauso wie bei normalen Coriolis-Durchflussmessgeräten durch Messung der Eigenfrequenz des Direktmessrohres möglich. Somit kann in der Auswerteelektronik aus Dichte und Massendurchfluss auch der Volumendurchfluss berechnet und ausgegeben werden.

**Bezugszeichenliste**

1   Fluideinlass
2   Strömungsteiler
3   Messrohr
4   Messrohr
5   Schwingungserregeranordnung
6   Schwingungssensoranordnung
7   Schwingungssensoranordnung
8   Erstes Direktmessrohr
9   Zweites Direktmessrohr
10  Indirektmessrohr
11  Gehäuse
12  Fluideinlass
13  Strömungsteiler
14  Erster Direktmessrohr-Eingang
15  Zweiter Direktmessrohr-Eingang
16  Indirektmessrohr-Eingang
17  Koppelelement
18  Indirektmessrohr-Auslass
19  Erstes Direktmessrohr
20  Zweites Direktmessrohr
21  Koppelelement
22  Sammelelement
23  Indirektmessrohr-Auslass
24  Austrittsflansch
25  Schwingungserreger
26  Schwingungssensor
27  Schwingungssensor

**Patentansprüche**

1.  Coriolis-Durchflussmessgerät, umfassend

    a) einen Messgeräteinlass sowie einen Messgerätauslass für ein Fluid,
    b) mindestens ein direkt messendes Direktmessrohr (8, 9) mit mindestens einem Schwingungserreger (25) und mindestens zwei Schwingungssensoren (26, 27),
    c) mindestens ein indirekt messendes Indirektmessrohr (10) mit einem Indirektmessrohrauslass (23) und
    d) mindestens einen in Strömungsrichtung hinter dem Messgeräteinlass und vor dem mindestens einen Direktmessrohr (8, 9) und dem mindestens einen Indirektmessrohr (10) angeordneten Strömungsteiler (13),
    **dadurch gekennzeichnet, dass**
    e) das mindestens eine Direktmessrohr (8, 9) in Strömungsrichtung vor dem Indirektmessrohrauslass (23) unmittelbar oder mittelbar in das Indirektmessrohr (10) oder eines der Indirektmessrohre (10) mündet.

2.  Coriolis-Durchflussmessgerät nach Anspruch 1, **dadurch gekennzeichnet, dass** dem Indirektmessrohr (10) oder genau einem der Indirektmessrohre (10) mindestens zwei Direktmessrohre (8, 9) zugeordnet sind.

3.  Coriolis-Durchflussmessgerät nach Anspruch 2, **dadurch gekennzeichnet, dass** mindestens zwei der Direktmessrohre (8, 9) einzeln unmittelbar in das zugeordnete Indirektmessrohr (10) münden.

4.  Coriolis-Durchflussmessgerät nach Anspruch 2, **dadurch gekennzeichnet, dass** mindestens zwei der Direktmessrohre (8, 9) mittelbar in das zugeordnete Indirektmessrohr (10) münden, indem die mindestens zwei der Direktmessrohre (8, 9) in einem gemeinsamen Endstück (22) zusammengeführt sind, wobei das Endstück (22) in das zugeordnete Indirektmessrohr (10) mündet.

5.  Coriolis-Durchflussmessgerät nach einem der Ansprüche 1 bis 4, **dadurch gekennzeichnet, dass** es eine Messgerät-Elektronikeinheit aufweist, welche eingerichtet ist, bei einer Durchflussmessung zur Bestimmung des tatsächlichen Massendurchflusses $Q_{ALL}$ des Fluids eine Gleichung der Form $Q_{ALL} = (1 + \lambda)^* Q_{ALLZW}$ einzusetzen, wobei $Q_{ALLZW}$ ein mit dem Coriolis-Durchflussmessgerät festgestellter Massendurchfluss ist und $\lambda$ ein vom Massendurchfluss und zumindest von der Viskosität abhängiger Faktor.

6.  Coriolis-Durchflussmessgerät nach Anspruch 5, **dadurch gekennzeichnet, dass** der Faktor $\lambda$ in der elektronischen Auswerteeinheit als Kennfeld gespeichert ist, wobei das Kennfeld entweder eine analytische Form aufweisen oder in Form von diskreten Werten vorliegt.

7.  Verfahren zum Betrieb eines Coriolis-Durchflussmessgeräts, bei dem ein Fluidstrom mittels eines in Strömungsrichtung hinter einem Messgeräteinlass angeordneten Strömungsteilers (13) in mindestens einen Direktmessstrom und mindestens einen Indirektmessstrom aufgeteilt wird, wobei jeder Direktmessstrom ein Direktmessrohr (8, 9) zur Messung mittels des Coriolis-Durchflussmessverfahrens durchströmt und jeder Indirektmessstrom ein Indirektmessrohr (10) durchströmt, und der mindestens eine Direktmessstrom in den Indirektmessstrom oder in mindestens einen der Indirektmessströme eingeleitet wird.

8.  Verfahren nach Anspruch 7, **dadurch gekennzeichnet, dass** mindestens zwei Direktmessströme dem Indirektmessstrom oder einem der Indirektmessströme zugeordnet werden, wobei die mindestens zwei Direktmessströme einzeln oder nach Zusammenführung gemeinsam dem zugeordneten Indirektmessstrom zugeführt werden.

9. Verfahren nach Anspruch 7 oder 8, **dadurch gekennzeichnet, dass** aus Messwerten zu jedem Direktmessstrom ein Gesamtstrom-Massendurchfluss $Q_{ALL}$ unter Berücksichtigung von einer von Massendurchfluss und Viskosität sowie optional von Druck und Temperatur abhängigen Größe ermittelt wird, wobei der Gesamtstrom-Massendurchfluss $Q_{ALL}$ mittels der Formel $Q_{ALL} = (1 + \lambda)* Q_{ALLZW}$ ermittelt wird, wobei $\lambda$ eine vom Massendurchfluss und der Viskosität sowie optional von Druck und Temperatur abhängige Größe ist und $Q_{ALLZW}$ eine Zwischengröße für die Summe aus den Direktmessströmen und dem mindestens einen Indirektmessstrom ist.

10. Verfahren nach einem der Ansprüche 7 bis 9, **dadurch gekennzeichnet, dass** die vom Massendurchfluss und der Viskosität sowie optional von Druck und Temperatur abhängige Größe $\lambda$ experimentell ermittelt wird.

11. Verfahren nach einem der Ansprüche 7 bis 10, **dadurch gekennzeichnet, dass** die vom Massendurchfluss und der Viskosität sowie optional von Druck und Temperatur abhängige Größe $\lambda$ mittels Simulationsrechnung bestimmt wird.

12. Verfahren nach einem der Ansprüche 7 bis 11, **dadurch gekennzeichnet, dass** die vom Massendurchfluss und der Viskosität sowie optional von Druck und Temperatur abhängige Größe $\lambda$ in der elektronischen Auswerteeinheit als Kennfeld gespeichert wird.

13. Verfahren nach Anspruch 12, **dadurch gekennzeichnet, dass** das Kennfeld eine analytische Form aufweist.

14. Verfahren nach Anspruch 12, **dadurch gekennzeichnet, dass** das Kennfeld in Form von diskreten Werten vorliegt, zwischen denen mit Interpolationsmethoden interpoliert wird.

15. Verfahren nach Anspruch 14, **dadurch gekennzeichnet, dass** mittels Kriging-Verfahrens interpoliert wird.

**Fig. 1**

*Stand der Technik*

**Fig. 2**

$Q_{T2}$

$Q_{T1}$

$Q_{ALL}$

$Q_R$

$Q_{ALL}$

*Fig. 3*

8

9

17

18

10

*Fig. 4*

$Q_{T2}$

$Q_{T1}$

$Q_{ALL}$

$Q_R$

_**Fig. 5**_

$Q_{ALL}$

_**19**_    _**20**_

_**21**_

_**23**_

_**22**_    _**Fig. 6**_

$\lambda$

_**Fig. 7**_

Kalibrier-Bereich

$Q_{min}$    $Q_{max}$    $Q_{ALLZW}$

Europäisches
Patentamt

European
Patent Office

Office européen
des brevets

**EUROPÄISCHER RECHERCHENBERICHT**

Nummer der Anmeldung

EP 20 19 7928

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 661 232 A (VAN CLEVE CRAIG BRAINERD [US] ET AL) 26. August 1997 (1997-08-26) | 1-14 | INV. G01F1/84 |
| A | * Abbildungen 5,6 *<br>* Ansprüche 1-2 *<br>* Spalte 8, Zeile 17 - Zeile 24 *<br>----- | 15 | ADD. G01F15/02 |
| A,D | US 5 861 561 A (VAN CLEVE CRAIG BRAINERD [US] ET AL) 19. Januar 1999 (1999-01-19)<br>* Abbildung 9 *<br>* Spalte 11, Zeile 28 - Zeile 30 *<br>* Spalte 11, Zeile 46 - Zeile 54 *<br>----- | 5,6,9, 12-15 | |
| A | US 2019/234776 A1 (DILLARD WALTER S [US] ET AL) 1. August 2019 (2019-08-01)<br>* Anspruch 3; Abbildung 2B *<br>----- | 1-15 | |
| A | WO 2013/137866 A1 (MICRO MOTION INC [US]; PATTEN ANDREW TIMOTHY [US] ET AL.) 19. September 2013 (2013-09-19)<br>* Anspruch 1; Abbildung 4 *<br>----- | 1-15 | |

RECHERCHIERTE SACHGEBIETE (IPC)

G01F

Der vorliegende Recherchenbericht wurde für alle Patentansprüche erstellt

| Recherchenort | Abschlußdatum der Recherche | Prüfer |
|---|---|---|
| Den Haag | 10. März 2021 | Rambaud, Patrick |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 19 7928

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-03-2021

| Im Recherchenbericht angeführtes Patentdokument | Datum der Veröffentlichung | Mitglied(er) der Patentfamilie | Datum der Veröffentlichung |
|---|---|---|---|
| US 5661232 A | 26-08-1997 | AU 2063497 A | 22-09-1997 |
| | | CN 1217788 A | 26-05-1999 |
| | | DE 69713074 T2 | 17-10-2002 |
| | | EP 0885382 A2 | 23-12-1998 |
| | | HK 1019637 A1 | 18-02-2000 |
| | | JP 3313731 B2 | 12-08-2002 |
| | | JP 2000505557 A | 09-05-2000 |
| | | US 5661232 A | 26-08-1997 |
| | | WO 9733150 A2 | 12-09-1997 |
| US 5861561 A | 19-01-1999 | AU 1579797 A | 11-08-1997 |
| | | BR 9706984 A | 20-07-1999 |
| | | CA 2241934 A1 | 24-07-1997 |
| | | CN 1213431 A | 07-04-1999 |
| | | DE 69711846 T2 | 29-08-2002 |
| | | EP 0874976 A1 | 04-11-1998 |
| | | HK 1018810 A1 | 07-01-2000 |
| | | JP 3283524 B2 | 20-05-2002 |
| | | JP 2000502453 A | 29-02-2000 |
| | | KR 19990077354 A | 25-10-1999 |
| | | RU 2181477 C2 | 20-04-2002 |
| | | US 5861561 A | 19-01-1999 |
| | | WO 9726509 A1 | 24-07-1997 |
| US 2019234776 A1 | 01-08-2019 | AU 2018404778 A1 | 30-07-2020 |
| | | BR 112020015426 A2 | 08-12-2020 |
| | | EP 3746748 A1 | 09-12-2020 |
| | | US 2019234776 A1 | 01-08-2019 |
| | | WO 2019147332 A1 | 01-08-2019 |
| WO 2013137866 A1 | 19-09-2013 | AR 092805 A1 | 06-05-2015 |
| | | AU 2012373249 A1 | 11-09-2014 |
| | | BR 112014021005 A2 | 27-10-2020 |
| | | CA 2867010 A1 | 19-09-2013 |
| | | CN 104272063 A | 07-01-2015 |
| | | EP 2825853 A1 | 21-01-2015 |
| | | HK 1205787 A1 | 24-12-2015 |
| | | JP 5985035 B2 | 06-09-2016 |
| | | JP 2015510137 A | 02-04-2015 |
| | | KR 20140131393 A | 12-11-2014 |
| | | MX 343724 B | 18-11-2016 |
| | | SG 11201405678P A | 27-11-2014 |
| | | US 2015013474 A1 | 15-01-2015 |
| | | WO 2013137866 A1 | 19-09-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202017006709 U1
- DE 102016118016 A1
- US 9080908 B2
- DE 102008002217 A1
- DE 202014102258 U1
- US 5861561 A